# EUROPEAN PATENT SPECIFICATION

(11) **EP 1 186 191 B1**
(45) Date of publication and mention of the grant of the patent: **15.10.2008**
(21) Application number: 00931869.2
(22) Date of filing: 18.05.2000
(51) Int. Cl.: H04Q 7/38

(54) **PROCEDURE FOR LOAD CONTROL IN A CELLULAR CDMA COMMUNICATIONS SYSTEM**
VERFAHREN ZUR LASTSTEUERUNG IN EINEM ZELLULAREN CDMA-KOMMUNIKATIONSSYSTEM
PROCEDE DE COMMANDE DE CHARGE DANS UN SYSTEME DE COMMUNICATION CELLULAIRE CDMA

(30) Priority: 28.05.1999 SE 9901951
(43) Date of publication of application: 13.03.2002
(73) Proprietor: TELIASONERA AB, 106 63 Stockholm (SE)
(72) Inventor: HENRIKSSON, Anders, S-223 34 Lund (SE); AYOUB, Souhad, S-141 55 Huddinge (SE)
(74) Representative: Hopfgarten, Nils
(86) International application number: PCT/SE2000/000997
(87) International publication number: WO 2000/074427

(56) References cited:
- WO-A1-95/08897
- WO-A2-98/24199
- GB-A- 2 327 574
- US-A- 5 267 261
- US-A- 5 530 917

## Description

### Technical field

The present invention relates to a method for a mobile radio communications system to manage problems of lack of capacity, and to increase the data throughput in a UMTS communications network. Especially the method according to the invention makes possible a sharing of load in an overloaded cell to neighboring cells with free capacity. The method provides steps to select a suitable mobile for handover to a suitable neighboring cell. The method utilizes signal strength measuring and capacity calculations in the cells.

### Prior art

UMTS (Universal Mobile Telecommunications System) is the European name of the third generation mobile systems that are planned to be in operation at the beginning of the 21st century. The standardization work for UMTS is in full progress at present and it is expected that the first phase of the standards shall be ready in the year 2000. Much of the work is done in common between Japan and Europe and in all probability the standards will be in common.

UMTS is expected to offer, as GSM (Global System for Mobile communication) both voice/speech- and data services but with the difference that UMTS will offer higher data speed compared with the GSM of today. UMTS will, in addition to the services of today, support i.a. multimedia services and Internet access with transmission speeds up to 2 Mbit/s.

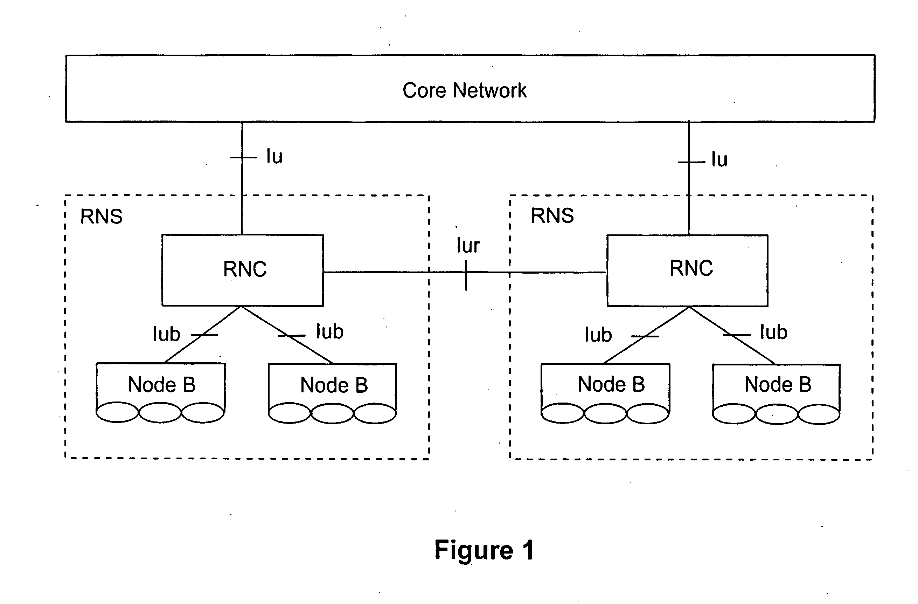

The standardization work for UMTS is focused on the creation of a new radio access network called UMTS Terrestrial Radio Access Network, UTRAN. The idea is that the infrastructure in form of MSCs and SGSN/GGSN that will exist in the GSM/GPRS-network when UMTS is launched shall be reused. A clear picture of a suggestion for network architecture for UTRAN is given in Figure 1. The radio access technology itself in UTRAN is called UMTS Terrestrial Radio Access, UTRA. It has two modes, one frequency duplex mode, FDD-mode, and one time duplex mode, TDD-mode. Both modes are based on use of a spread spectrum technology, CDMA. In the description of the channel structure and the handover functions in UTRA below, it is the FDD-mode that is meant. The present invention, however, can as such be applied to both the FDD- and TDD-mode.

One of the main qualities in CDMA-based systems is that all users can utilize the same frequency band at the same time. In order to distinguish between different users and different cells in a CDMA-system, different codes are utilized. In UTRA two kinds of codes are used, spreading codes and scrambling codes. The spreading code spreads the information that shall be transmitted at a chip rate of 4096 Mchip/s. The length of the spreading code varies from 4-265 bits, depending on current data speed. The scrambling codes, on the other hand, do not change the number of bits that shall be transmitted, but only changes their value according to a well-defined schedule. In downlink the spreading code is used to secure orthogonality between different users in the same cell, irrespective of by which data speed they are transmitting. Each cell also uses a scrambling code of its own, which makes it possible to distinguish between different cells. This code is in this way functioning as a cell identity.

In uplink, each user/terminal utilizes a unique scrambling code to make it possible to distinguish between the users in the cell. On the other hand there is no coordination needed of the use of the spreading codes of the uplink. All users/terminals can utilize just any spreading code.

A channel in UTRA consequently is characterized in a unique combination of spreading code and scrambling code, and the frequency that is utilized. The number of existing spreading codes is limited when they shall be orthogonal. If the number of spreading codes in downlink in a cell is not sufficient, it is possible to use more than one scrambling code. This procedure, however, should be avoided, if possible, since the users will not be perfectly orthogonal. Thanks to the structure of the spreading code, users with different data speeds in a cell are still orthogonal. The capacity in form of the number of users, however, is directly depending on which spreading codes that are used, A user with code length 64 corresponds to two users with code length 128.

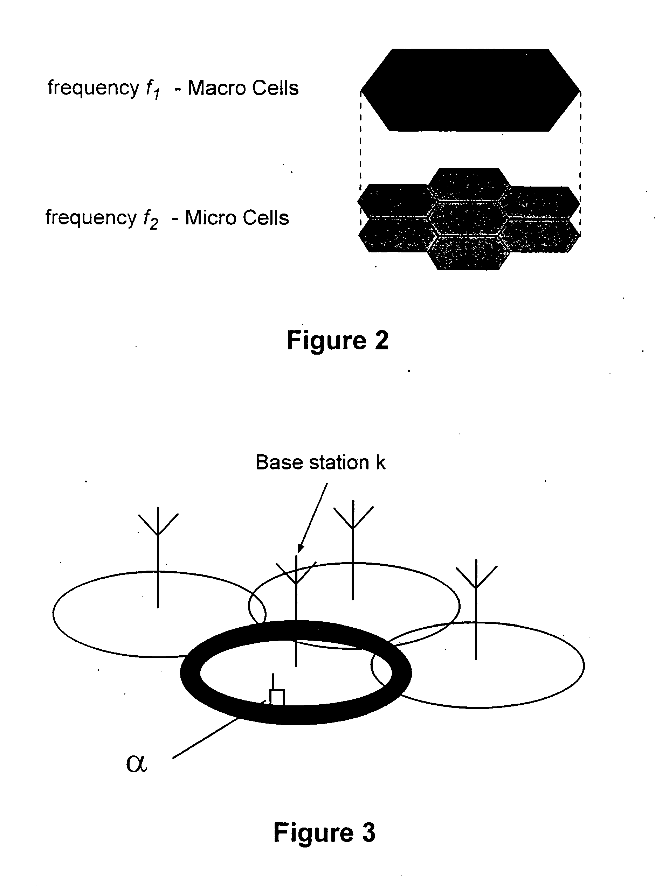

The use of codes to distinguish between users makes it possible to utilize a frequency repetition distance of one (1) in most cases. If the operator has a plurality of frequencies available, these can be used to create hierarchical cell structures with several layers, see Figure 2. Depending on the movement pattern of the respective terminal, and the services it utilizes, it may be of interest to route it to any of the current layers of cells.

In the first phase of the cell selection procedure, each terminal measures received signal strength from the base stations in the neighborhood. After that, the terminal synchronizes to the cell that was strongest and identifies which scrambling code that is used by the cell. As long as the terminal is in "idle mode", it is continuously searching for new cells. A control unit in the network (RNC) provides a priority list to the terminal over which scrambling codes (cell identities) it shall search for. This list is continuously updated to reflect changes, if any, in the environment around the terminal.

An essential problem concerning selection of cell in CDMA-systems is the so-called "near-far effect". It occurs when a terminal that is close to a base station transmits with too high output power and in that way drowns the signals from other terminals in the same area. In order to prevent the occurrence of near-far problems, UMTS-terminals are using a very fast power control.

When a terminal is moved from one cell to another, or when it for some reason finds that the cell (base station) to which the terminal is synchronized does not have sufficiently high quality, the terminal changes base station. The change is called handover and is an essential constituent within mobile telecommunication which advisably is preceded by some suitable procedure for selection of new base station. There are two main types of handover in a CDMA-system: Soft Handover and Hard Handover. *Soft Handover* is defined as a handover where the terminal starts communicating with a new cell without breaking the communication with the previous cell. The requirement is that the communication towards the two cells is using the same frequency. A terminal in soft handover, however, is not limited to communicating with two cells. If it is considered as an advantage, it can communicate with more than two cells at the same time.

*Hard Handover* means that the terminal breaks the communication with the present cell before a new connection is established towards a new cell. The most common reasons for using hard handover are that the cells in question are using different frequencies, or that a soft handover is not needed as, for instance, for packet data services.

In order to facilitate handover, an UTRA-terminal should keep the following cell lists updated.
- *Active set*: The cells with which a terminal is in soft handover at a certain occasion.
- *Handover monitoring set:* All cells (UTRA or other systems such as GSM) which the terminal has been ordered to surveil by UTRAN when it is in "active mode". The set corresponds to BA(SACCH) in GSM.
- *Handover candidate set:* Those cells that at the occasion do not belong to the "Active set" of the terminal, but which are received with sufficient signal strength. These cells do not need to be on the frequency that at the present occasion is used by the terminal. Also cells in other systems, such as GSM, can be included in the set.

### Aim of the invention

UMTS with its large supply of services is expected to be very popular among mobile users, which will result in capacity problems for UMTS-operators. Because the mobile users are mobile in the system, the operator will have capacity problems in certain cells or in certain areas where the traffic load exceeds the available number of resources. These capacity problems are expected to become larger than for, for instance, GSM since a larger amount of different types of services will be offered within UMTS. The traffic load is unpredictable and varies both in time and room. Examples of areas where capacity problems may arise are railway stations, airports, trade fairs and conference establishments etc.

Capacity problems can cause both blocking in the network and/or a reduced data speed for the common UMTS-user. The capacity problem can be solved either by means of an over-dimensioning of the network, or by means of specific algorithms which only operates when capacity problems arise. An example of such an algorithm is a "cell load sharing"-algorithm. "Cell load sharing" moves radio resources from neighboring cells to make it possible to use them in the cell where the lack of resources occurs. Over-dimensioning of networks costs a lot of money and it means that the problem is eliminated by "extension", providing more resources to the cells that are expected to be overloaded.

One way of reducing the capacity problem in a cell is to direct certain selected terminals to other cells if these cells are of sufficiently good quality. "Directed Retry"- and "Cell Load Sharing"-functionality are used in the GSM-system of today to reduce the probability of blocking and to increase the capacity in the network. "Directed Retry" is used when the terminal enters into the system and finds that the most attractive cell is lacking free resources, whereas neighboring cells have free resources. "Cell Load Sharing" is used during a call in progress as a part of the handover algorithm.

US 5 530 917 describes a cell-load sharing technique which can be used in CDMA systems using soft handovers. To select the most favourable communication channel or base station a type of load value is then suggested which is a kind of quality factor and which becomes successively more beneficial the higher the value of the quality factor is for a connection.

In the Swedish patent application 9804038-9, published on 25.05.2000 a procedure is described for sharing of load in an overloaded cell to neighboring cells in a tele- and data communication system, such as GSM with HSCSD. The present invention is based on the solution in the patent application 9804038-9, but is adapted to UMTS. Possibilities of application to other systems are not discussed in this patent application.

One aim of the present invention is to provide a method to reduce capacity problems that can arise in UMTS. Specifically, the invention aims at providing an algorithm that controls and shares the traffic load in a future UMTS-network that operates with CDMA. A further aim of the invention is to provide an increase of the data speed or data throughput to the UMTS-terminals. In addition, the aims above shall be fulfilled in such a way that problems with "near-far"-effects are minimized.

### Summary of the invention

The present invention fulfils above mentioned aims by a method according to claim 1. Thus according to the invention a method is provided for control of load in cellular tele- and data communication systems that utilizes CDMA, including a number of cells that are served by a base station each, and a number of mobile terminals in each cell. The base stations in such a system is controlled by a control unit (RNC), and each terminal *i* is connected to, or has a favorite base station *k*. Signal strength values G*ji* are collected for each terminal *i* and neighboring base station *j* to the base station *k*. For each terminal *i*, an amount Aᵢ of base stations are created for which G*ji>*α, where α is a threshold value. For each mobile *i* is selected from A*i* a base station that gives highest increase of total data throughput to create an amount B. From the amount B is selected that mobile station pair that provides highest increase of total data throughput. Handover is ordered of the selected mobile to the selected base station in the mobile - base station- pair. The procedure is adapted to a CDMA-system that supports soft handover of a terminal *i* from a cell *k* to another cell *j*, which means that said terminal *i* communicates with both these cells *k* and *j* at the same time on the same frequency for a period of time at the handover. The base stations in the amount *Ai* therefore are divided into the subsets *Ai1* including cells in Ai that are using the same frequency as cell k, and A*i2* including other cells in A*i*.

The increase of the total data throughput is calculated based on the capacity made available at the handover in the potential base station in said mobile - base station-pair, plus the capacity made available at the handover in base station *k*.

In order to avoid "near-far effects", base stations (or cells) for which the signal strength G*ji* does not exceed the signal strength G*ki* for base station *k* by the value of a parameter δ that is selected by the operator, are advisably not taken into consideration at the calculation.

Advantageous embodiments of the invention are given in the dependent claims.

### Brief description of the drawings

Advantageous embodiments of the invention is described below in detail with reference to the enclosed figures, of which
Figure 1 shows the network architecture for UTRAN according to standard SMG2 ZZ.01 v0.0.9 December 1998;
Figure 2 is an example of a hierarchical cell structure in UMTS;
Figure 3 shows a schematic picture of the area in a cell within which terminals that can be candidates for handover are looked for.

### Detailed description of preferred embodiments

The present invention aims at using a cell load-sharing algorithm, i.e. a procedure or sharing of load for UMTS. The invention facilitates and increases the sharing of load in the system.

From the operator's point of view it is desirable to have low probability of blocking in the network and high data speed or high data throughput with rather low interference. The algorithm in the procedure according to the invention can be used both at setting up of voice- and data calls as well as during the call in progress. The procedure can be used in situations when one or more terminals in the network want to use a higher data speed than what is available in the cell. The intention is that at congestion of traffic, the procedure shall be applied in order to reduce the probability of blocking in the system and to increase the data speed and by that throughput in the system.

In a preferred embodiment of the present invention, the procedure is recurrent at a certain interval T, which is set by the operator. The procedure can, when needed, also be repeated dynamically. The algorithm is based on information about the traffic load of each cell and the radio environment of the terminals and their need for data speed. The algorithm is suitably used at congestion of traffic and when the radio resources of the cell is lower than the need of resources in the cell. The algorithm is designed to be used on cell level.

In the algorithm, the to the network reported or measured signal strength values or signal-to-noise ratio of the terminals are used. Let G*ji* be the measured signal strength value (obtained by any method) between base station *j* and terminal *i* for all cells *j* that are neighbors to the cell with index *k*.

In a first step of the algorithm, a terminal is connected to cell *k,* or has cell *k* as favorite cell (the cell that the terminal should use in normal cases). G*ki* represents the measured signal strength value or signal-to-noise-ratio (obtained by any method) at terminal *i* of the base station *k* belonging to the favorite cell *k.*

In the algorithm a threshold value α, which is set by the operator, is utilized. All values of G*ji* higher than α results in a positive registration in the sense that the cell (the base station) *j* constitutes a good candidate to the terminal *i*. Other G*ji* gives a negative registration. The operator shall be able to set α at cell level. The neighboring base station with index *j* to the base station with index *k* and the G*ji* of which is larger than α, constitutes a good candidate to terminal *i* and is included in the candidate amount A*i*. This implies that G*ki* is larger than α.

The amount Ai consists of all neighboring cells *j* to cell *k* that fulfils the condition that G*ji* is larger than α for terminal *i*. In the UMTS-standards A*i* is called "Handover Candidate Set", as has been described in the background above. Neighboring cells are the cells that are geometrically located close to the cell in question and which is defined according to a list about which the network is informing the terminal. It can be cells in the same layer as the cell in question, or it can be cells in another layer. In Figure 2 are shown hierarchical cells in two layers, where larger cells, macro cells 1, occupy a frequency *f1*, and smaller cells, micro cells 2, occupy another frequency *f2* wholly or partly on the same geographical area.

In order to prevent emergence of "near-far effects". the amount A*i* is divided into two subsets A*i1,* which consist of the cells in A*i* that use the same frequency as cell *k*, and A*i2*, which consists of other cells in A*i*. Depending on how the network is configured, the cells in A*i2* can belong to the same cell layer as cell *k*, or another layer in the case with hierarchical cell structures.

In Figure 3 is schematically illustrated a number of cells with belonging base stations in a UMTS-system. For the sake of simplicity, the cells have been drawn identical and with regular form; in reality the cells are probably of different sizes and highly irregular. The relation G*ji>*α describes an area on the fringe of the cell *k*. According to the invention it is within this area that the algorithm will look for terminals that are suitable for "cell re-selection" or "handover".

The parameter α can also be used to determine if the algorithm shall be used or not. When α is of infinite size, the algorithm is not used. When α is very small, all neighboring cells are "favorite cells" for terminal *i* to connect to.

The parameter α is a kind of protection against deterioration of the link quality of the terminal and should be set to a moderately high value, so that the quality of the link and the interference is not influenced to any appreciable extent. The quality of the link is that which can be measured by bit error rate or similar measure according to known technology.

For each terminal *i* in the cell *k*, the network checks all neighboring cells *j* in the amount *Ai*={A*i1*,A*i2*} that together with the terminal fulfil the condition G*ji>*α.

When the amount A*i1* is not empty, and if the service that is used does not require soft handover, one checks which capacity *x1* terminal *i* can have allocated to itself (which maximally is the wanted capacity of the terminal *i*) in the potentially new cells that belong to the amount A*i1.* In order to avoid "near-far effects", the cells where G*ji*< G*ki*-δ_{hard}, where δ_{hard} is a parameter that is set by the operator, are not taken into consideration.

After that, the network checks which capacity *yl* that can be allocated to other terminals in the cell *k*, to which the terminal in question for the moment is connected (serving cell), given that the terminal makes "cell re-selection" or handover to the candidate cell in question.

When the amount A*i1* is not empty and soft handover is used, the capacity in all cells that are included in the active set of the terminal are checked and compared with the available capacity in the cells that are in the amount A*i1*. In order to avoid "near-far effects", the cells in A*i1* where G*ji<* Gki-δ_{soft}, where δ_{soft} is a parameter that is set by the operator, are not taken into consideration. The maximum data speed that a change of cells in active set should imply, *x2*, and the capacity that is set free in the cell/cells that leaves active set, *y2*, are calculated.

If the amount A*i2* is not empty, i.e. there are candidate cells on other frequencies, in the same or another cell layer, than the one the terminal at present is using, it is checked which capacity *x3* terminal *i* can have allocated to it (maximally the wanted capacity) if it performs "cell re-selection" or handover to a cell in A*i2*.

After that is checked which capacity *y3* that can be allocated to other terminals in the cell the terminal in question at present is connected to (serving cell), given that the terminal makes a cell re-selection or handover to the candidate cell in question.

These two parameters are added (*xₙ+yₙ*) and one will have the total capacity that can be allocated in the network, given that the terminal is connected to the new cell, i.e. the total increase of the data throughput is studied in the network.

This is done for all cells in the amount of candidates Ai for terminal *i*, in order to then select the cell called [MAX(A*i*)] that gives the highest increase of data speed or throughput. The cell [MAX(A*i*)] is the one that provides maximal gain at a change of cell of terminal *i*. If there in this case should be more candidate base stations that provide maximal increase of throughput to terminal *i*, that base station which provides highest G*ji*, i.e. the one that is strongest received is selected.

The procedure above is repeated for all terminals *i* in the cell in question. Let B be the amount of cells [MAX(Ai)] that gives maximal throughput for all terminals in the cell in question. Then the "base station - terminal"-pair is selected that provides maximal [MAX(At)] in the amount B. If there are more than one "base station - terminal"-pair in the amount B that give maximal data speed or throughput, the task is to select a final terminal from the amount B: The selection can be made at random, or based on the one that provides the highest G*ji*.

The network orders the selected terminal to make cell re-selection or handover to the appointed base station (or the cell). Change of cell can be made by, for instance, dynamically changing the "cell selection parameters" at selection of cell in "Idle Mode", or by dynamically changing the handover parameters at "Active Mode".

In the case when soft handover is not used, the algorithm implies that the network calculates a suitable cell to a terminal and forces the terminal to select that cell. In the case when soft handover is used, the network forces the terminal to change its "active set".

If the cell that the terminal actually should like to be connected to again will have free capacity, the terminal that has been ordered to make a cell re-selection or handover to another cell, again can be switched over to this by a time punishment of hysteresis.

As a conclusion, a procedure has been shown that aims at overcoming problems of lack of capacity in future UMTS-networks. At the same time such an intelligent load-sharing algorithm will provide an increase of the data speed in the UMTS-networks. The invention is a further development of Swedish patent application 9804038-9 for GSM/HSCSD with main focus on new functionalities in UMTS, such as soft handover and hierarchical cell structures. In the GSM-system of today, load control is used to reduce the probability of blocking in a loaded network. The novelty and the contribution of the invention is that it reduces probability of blocking and at the same time increases data speed in a loaded UMTS-network. The invention results in that the data speed for UMTS-terminals can increase as a consequence of better utilization of channels (code utilization) in UMTS.

## Claims

1. Method for controlling load in a cellular telecommunications and data communications system including a number of cells that are served by one base station each, and a number of mobile terminals in each cell, said system utilizing CDMA and supporting soft handover of a terminal i from a cell controlled by a base station k to another cell controlled by a base station j, while said terminal i communicates with both cells at the same time on the same frequency, and wherein the base stations are controlled by a control unit (RNC), and each terminal i is connected to, or has, a favorite base station k, the method comprising the following steps:
- signal strength values Gji for each terminal i and neighboring base station j to the base station k are collected,
- for each terminal i, an amount Ai of base stations are created for which Gji>α, where α is a threshold value, said amount Ai being divided into the subset Ail including cells in Ai that are using the same frequency as the cell controlled by base station k, and Ai2 including other cells in Ai,
- for each terminal i, a base station is selected from Ai that provides highest increase of total data throughput to create an amount B,
- the terminal-base station-pair that provides highest increase of total data throughput is selected from said amount B, the increase of total data throughput being calculated based on the at the handover free capacity in the potential base station in said terminal-base station-pair, plus the capacity made available in base station k at the handover, and
- handover of the selected terminal to the selected base station in said selected terminal-base station-pair is ordered.

2. Method as claimed in claim 1, **characterized in that** cells *j* in A*i1,* for which the signal strength G*ji* does not exceed the signal strength G*ki* for cell *k* by the value of a parameter δ, which is set by the operator, are not considered at calculation of the free capacity.

3. Method as claimed in claim 2, **characterized in that** said parameter δ is determine depending on whether soft handover is used of the terminal *i*.

4. Method as claimed in any of the previous claims, **characterized in that** if, at the selection of base station from the amount A*i*, more than one base station provides the same increase of the total data throughput, that base station is selected which has the highest signal strength value G*ji*.

5. Method as claimed in any of the previous claims, **characterized in that** if, at the selection of "terminal - base station"-pair from the amount B, more than one "terminal - base station"-pair provide the same increase of the total data throughput, that pair is selected which has the highest signal strength value G*ji*, or a pair is selected at random.

6. Method as claimed in any of the previous claims, **characterized in that** the threshold value α is variable and is set by a telecommunications operator.

7. Method as claimed in any of the previous claims, **characterized in that** the control of load is performed at regular intervals, which are set by a telecommunications operator.

8. Method as claimed in any of the previous claims, **characterized in that** the control of load is performed dynamically when needed, based on the traffic load of each cell, or the radio environment of the terminals and their need for data speed.

9. Method as claimed in any of the previous claims, **characterized in that** handover is ordered by dynamically changing haridover-parameters.

## Patentansprüche

1. Verfahren zum Steuern der Belastung in einem zellularen Telekommunikations- und Datenkommunikationssystem, das eine Anzahl von Zellen, die jeweils durch eine Basisstation bedient werden, und eine Anzahl von mobilen Endgeräten in jeder Zelle einschließt, welches System CDMA benutzt und weiche Übergabe eines Endgerätes i von einer Zelle, die durch eine Basisstation k kontrolliert wird, zu einer anderen Zelle, die durch eine Basisstation j kontrolliert wird, unterstützt, während das Endgerät i mit beiden Zellen zur selben Zeit auf derselben Frequenz kommuniziert, und bei dem die Basisstationen durch eine Kontrolleinheit (RNC) kontrolliert werden und jedes Endgerät i mit einer Favoritenbasisstation k verbunden ist oder eine solche hat, welches Verfahren die folgenden Schritte aufweist:
- Signalstärkenwerte Gji für jedes Endgerät i und zur Basisstation k benachbarte Basisstation j werden gesammelt,
- für jedes Endgerät i wird eine Menge Ai von Basisstationen geschaffen, für die Gji>α, wobei α ein Schwellwert ist, welche Menge Ai in die Untermenge Ai1, die Zellen in Ai einschließt, die dieselben Frequenz wie die Zelle verwenden, die durch die Basisstation k kontrolliert wird, und Ai2 aufgeteilt wird, die anderen Zellen in Ai einschließt,
- für jedes Endgerät i wird eine Basisstation aus Ai ausgewählt, die den höchsten Zuwachs von gesamtem Datendurchsatz hat, um eine Menge B zu schaffen,
- das Endgeräte-Basisstations-Paar, das den größten Zuwachs von gesamten Datendurchsatz liefert, wird aus der Menge B ausgewählt, wobei der Zuwachs an gesamten Datendurchsatz aufgrund der bei der Übergabe freien Kapazität in der potenziellen Basisstation in dem Endgeräte-Basisstations-Paar plus die Kapazität berechnet wird, die in der Basisstation k bei der Übergabe zur Verfügung gestellt wird, und
- Übergabe des ausgewählten Endgeräts zur ausgewählten Basisstation in dem ausgewählten Endgeräte-Basisstations-Paar wird angeordnet.

2. Verfahren nach Anspruch 1, **dadurch gekennzeichnet, dass** Zellen j in Ai1, für die die Signalstärke Gji nicht die Signalstärke Gki für die Zelle k um den Wert eines Parameters δ übersteigt, der durch den Betreiber eingestellt wird, nicht bei der Berechnung freier Kapazität in Betracht gezogen werden.

3. Verfahren nach Anspruch 2, **dadurch gekennzeichnet, dass** der Parameter δ in Abhängigkeit davon bestimmt wird, ob weiche Übergabe des Endgerätes i benutzt wird.

4. Verfahren nach einem der vorangehenden Ansprüche, **dadurch gekennzeichnet, dass,** wenn bei der Auswahl der Basisstation von der Menge Ai mehr als eine Basisstation denselben Zuwachs des gesamten Datendurchsatzes liefert, die Basisstation ausgewählt wird, die den höchsten Signalstärkewert Gji hat.

5. Verfahren nach einem der vorangehenden Ansprüche, **dadurch gekennzeichnet, dass,** wenn bei der Auswahl des "Endgeräte-Basisstations"-Paars von der Menge B mehr als ein "Endgeräte-Basisstations"-Paar denselben Zuwachs des gesamten Datendurchsatzes liefert, das Paar ausgewählt wird, das den höchsten Signalstärkewert Gji hat, oder ein Paar zufällig ausgewählt wird.

6. Verfahren nach einem der vorangehenden Ansprüche, **dadurch gekennzeichnet, dass** der Schwellwert α variabel ist und durch einen Telekommunikationsbetreiber eingestellt wird.

7. Verfahren nach einem der vorangehenden Ansprüche, **dadurch gekennzeichnet, dass** die Steuerung der Last in regelmäßigen Intervallen durchgeführt wird, die durch den Telekommunikationsbetreiber eingestellt werden.

8. Verfahren nach einem der vorangehenden Ansprüche, **dadurch gekennzeichnet, dass** die Steuerung der Last dynamisch falls erforderlich beruhend auf der Verkehrsbelastung jeder Zelle oder der Funkumgebung der Endgeräte und ihrem Bedarf an Datengeschwindigkeit durchgeführt wird.

9. Verfahren nach einem der vorangehenden Ansprüche, **dadurch gekennzeichnet, dass** Übergabe durch dynamisches Ändern von Übergabeparametern angeordnet wird.

## Revendications

1. Procédé de commande de charge dans un système cellulaire de télécommunications et de communications de données comprenant un nombre de cellules qui sont desservies chacune par une station de base, et un nombre de terminaux mobiles dans chaque cellule, ledit système utilisant CDMA et prenant en charge le transfert souple d'un terminal i d'une cellule commandée par une station de base k à une autre cellule commandée par une station de base j, pendant que ledit terminal i communique avec les deux cellules en même temps sur la même fréquence, et dans lequel les stations de base sont commandées par une unité de commande (RNC), et chaque terminal i est connecté à, ou a, une station de base favorite k, le procédé comprenant les étapes suivantes :
- les valeurs de force de signal Gji pour chaque terminal i et station de base voisine j à la station de base k sont collectées,
- pour chaque terminal i, une quantité Ai de stations de base est créée pour laquelle Gji > α, où α est une valeur de seuil, ladite quantité Ai étant divisée en un sous-ensemble Ai1 comprenant les cellules dans Ai qui utilisent la même fréquence que la cellule commandée par la station de base k, et en un sous-ensemble Ai2 comprenant les autres cellules dans Ai,
- pour chaque terminal i, une station de base est sélectionnée à partir de Ai qui fournit la plus grande augmentation de débit total de données pour créer une quantité B,
- la paire de terminal et de station de base qui fournit la plus grande augmentation de débit total de données est sélectionnée à partir de ladite quantité B, l'augmentation de débit total de données étant calculée sur la base de la capacité libre au transfert dans la station de base potentielle dans ladite paire de terminal et de station de base, plus la capacité rendue disponible dans la station de base k au transfert, et
- le transfert du terminal sélectionné à la station de base sélectionnée dans ladite paire de terminal et de station de base sélectionnée est ordonné.

2. Procédé selon la revendication 1,
**caractérisé en ce que** les cellules j dans Ai1, pour lesquelles la force de signal Gji ne dépasse pas la force de signal Gki pour la cellule k de la valeur d'un paramètre δ, qui est réglée par l'opérateur, ne sont pas prises en compte dans le calcul de la capacité libre.

3. Procédé selon la revendication 2, **caractérisé en ce que** ledit paramètre δ est déterminé selon que le transfert souple est utilisé du terminal i.

4. procédé selon l'une quelconque des revendications précédentes, **caractérisé en ce que** si, à la sélection de la station de base à partir de la quantité Ai, plus d'une station de base fournit la même augmentation du débit total de données, il est sélectionné la station de base qui a la plus grande valeur de force de signal Gji.

5. Procédé selon l'une quelconque des revendications précédentes, **caractérisé en ce que** si, à la sélection due la paire de terminal est de station de base à partir de la quantité B, plus d'une paire de terminal est de station de base fournit la même augmentation du débit total de données, il est sélectionné la paire qui a la plus grande valeur de force de signal Gji ou il est sélectionné une paire de manière aléatoire,

6. Procédé selon l'une quelconque des revendications précédentes, **caractérisé en ce que** la valeur de seuil α est variable es est réglée par un opérateur de télécommunications.

7. Procédé selon l'une quelconque des revendications précédentes, **caractérisé en ce que** la commande de charge est effectuée à des intervalles réguliers, qui sont réglés par un opérateur de télécommunications.

8. Procédé selon l'une quelconque des revendications précédentes, **caractérisé en ce que** la commande de charge est effectuée dynamiquement lorsqu'elle est nécessaire, sur la base de la charge de trafic de chaque cellule ou de l'environnement radio des terminaux et de leurs besoins de vitesse de données.

9. Procédé selon l'une quelconque des revendications précédentes, **caractérisé en ce que** le transfert est ordonné par des paramètres de transfert changeant dynamiquement.
